# EUROPÄISCHE PATENTSCHRIFT

(11) **EP 0 748 155 B1**
(45) Veröffentlichungstag und Bekanntmachung des Hinweises auf die Patenterteilung: **22.07.1998**
(21) Anmeldenummer: 95906275.3
(22) Anmeldetag: 24.01.1995
(51) Int. Cl.: A01J 5/007

(54) **VERFAHREN ZUM MASCHINELLEN MILCHENTZUG**
MECHANICAL MILKING PROCESS
PROCEDE DE TRAITE MECANIQUE

(30) Priorität: 02.03.1994 DE 4406741
(43) Veröffentlichungstag der Anmeldung: 18.12.1996
(73) Patentinhaber: Westfalia Separator AG, 59302 Oelde (DE)
(72) Erfinder: SCHULZE-WARTENHORST, Bernhard, D-48231 Warendorf (DE); HAVER, Goswin, D-59302 Oelde (DE)
(74) Vertreter: Stracke, Alexander, Dipl.-Ing.
(86) Internationale Anmeldenummer: DE9500101
(87) Internationale Veröffentlichungsnummer: WO9523501

(56) Entgegenhaltungen:
- DE-A- 3 047 579
- DE-A- 3 621 666

## Beschreibung

Die Erfindung bezieht sich auf ein Verfahren zum maschinellen Milchentzug, bei dem zum Entziehen der Milch an dem Innenraum eines an eine Zitze angesetzten Melkbechers ein Unterdruck vorbestimmter Höhe angelegt wird und eine Pulsation eines Zitzengummis mit vorbestimmter Frequenz und Stärke durch eine alternierende Belüftung und Evakuierung eines Melkbecherzwischenraumes durchgeführt wird und bei angesetztem Melkbecher in einer Stimulationsphase während einer vorbestimmten Zeit vor der Hauptmelkphase der maximale Pulsunterdruck verringert und auf die Zitze stimulierend eingewirkt wird.

Ein derartiges Verfahren ist beispielsweise bekannt aus der DE 30 47 579 C2, wobei die Dauer der Stimulation durch eine vorgewählte Zeit bestimmt wird. Das Ergebnis der Stimulationsphase kann hierbei nicht überprüft werden. Da jedoch jede Milchtierrasse und jedes Tier auch noch abhängig vom Laktationsstadium unterschiedlich reagiert, kann es sich hier nur um einen Kompromiß für alle Tiere handeln. In der Praxis wurde festgestellt, daß es durch solche Verfahren auch zu negativen Reaktionen bei den Tieren durch Überstimulation kommen kann. Besonders deutlich treten diese Erscheinungen zu Beginn einer Laktation der Tiere auf oder wenn der Melker durch seine manuelle Stimulation am Euter beim Vormelken und der Eutersäuberung die maschinelle Stimulationszeit zusätzlich und ungekürzt am Euter der Tiere einwirken läßt. Diese zu langen Stimulationszeiten führen dann zu einem gestörten Milchabgabeverhalten der Tiere.

Ein ähnliches Problem tritt gegen Ende der Laktation der Tiere bei einer zu kurzen Stimulationsphase auf. In dieser Phase ist das Stimulationsbedürfnis der Tiere größer, so daß eine längere Stimulationszeit erforderlich ist, um ein gutes Ausmelken und kurze Melkzeiten zu erzielen.

Aus der DE 36 21 666 C2 ist bereits ein Verfahren zum maschinellen Milchentzug bekannt, bei dem die Stimulationszeit in Abhängigkeit vom Laktationsstadium der Tiere eingestellt wird. Aber auch hierbei geht man von festen Einstellungen aus, die nicht das individuelle Stimulationsbedürfnis der einzelnen Tiere und die vom Melker durchgeführte manuelle Stimulation berücksichtigt.

Der Erfindung liegt die Aufgabe zugrunde, ein Verfahren zu schaffen, mit dem das individuelle Stimulationsbedürfnis der Tiere berücksichtigt wird.

Diese Aufgabe wird dadurch gelöst, daß die Stimulationsphase unterteilt ist in eine Vorstimulationsphase, in der noch kein signifikantes Abmelken von Milch stattfindet, und eine anschließende Kontrollphase, in der durch Änderung des Druckverlaufes im Melkbecherzwischenraum die Intensität des Druckes durch das Zitzengummi auf die Zitze derart verringert wird, daß ein Abmelken von Milch erfolgt, und die Hauptmelkphase beginnt, sobald der Milchfluß einen vorgegebenen Schwellenwert überschreitet.

Die Dauer der Vorstimulationsphase ist so zu wählen, daß eine Überstimulation der zu melkenden Tiere mit Sicherheit ausgeschlossen ist. In dieser Phase kann die Stimulation in bekannter Weise erfolgen. In der anschließenden Kontrollphase wird der auf die Euterzitze der Tiere wirkende Klemmdruck des Zitzengummis reduziert, ohne daß sich der Charakter der Stimulationsphase ändert. Dadurch wird in Kombination mit einem ansteigenden Euterinnendruck ein Abmelken von Milch möglich. Die zunehmende Milchflußintensität ist dabei ein Indiz für den erzielten Stimulationseffekt und ermöglicht die Bestimmung der individuell optimalen Stimulationsdauer.

Es reicht keineswegs aus, nach Ablauf der Vorstimulationsphase in den normalen Melktakt zu wechseln, um dann die Milchflußintensität zu messen, weil durch das dann erfolgende komplette Öffnen des Zitzengummis der Strichkanal der Zitzen durch den vorhandenen Unterdruck öffnet und es zum ungehinderten Abmelken von im Euter vorhandener Zisternenmilch kommt. Dabei erzielen sehr leicht zu melkende Tiere, die einen sehr leicht zu öffnenden Schließmuskel der Zitzen haben, trotz fehlender Melkbereitschaft kurzfristig einen Milchfluß von mehr als 2 kg/Minute. Allerdings bricht der Milchfluß dann nach kurzer Zeit wieder zusammen und er eignet sich daher nicht als Indikator für das Ergebnis der Stimulationsphase.

Bei einer vorteilhaften Ausgestaltung wird die Veränderung des Druckverlaufes durch die Verlängerung der Belüftungsphase des Melkbecherzwischenraumes erzeugt. Die Länge der Belüftungsphase ist so zu wählen, daß Intensität und Größe des sich im Melkbecherzwischenraum aufbauenden Druckes erheblich von den in der Vorstimulation wirkenden Werten abweichen. Dadurch wird in der Kontrollphase durch das Zitzengummi ein geringerer Druck auf die Zitzenspitze bewirkt, wodurch bei ausreichendem Euterinnendruck die natürliche Widerstandskraft des Schließmuskels der Zitzen überwunden werden kann und damit die Milch in das Melkzeug gelangt. Beim Überschreiten eines vorgewählten Milchflusses wird dann die Stimulationsphase beendet, und die Hauptmelkphase beginnt.

Bei einer weiteren vorteilhaften Ausgestaltung ist die Belüftungsphase so gewählt, daß die Evakuierung des Melkbecherzwischenraumes unmittelbar nach Erreichen des atmosphärischen Druckes erfolgt. Der volle Druck wirkt also nur ganz kurz auf die Zitzen ein, wodurch die Zitzen während des gesamten Pulsverlaufes überwiegend einen geringeren Druck ausgesetzt sind, so daß in dieser Zeit schon Milch abgezogen werden kann.

Der Abzug von Milch kann noch dadurch erleichtert werden, daß die Dauer der Belüftungsphase ein Erreichen des atmosphärischen Druckes verhindert.

Die Dauer der Vorstimulationsphase sollte mindestens 20 Sekunden betragen. In dieser Zeit wird ein Stimulationsreiz ausgeübt, der das Ausschütten von Oxcitocin bis zu einem Tierindividuellen Schwellenwert bewirkt. Erst dann darf die Kontrollphase und im Anschluß daran das Melken begonnen werden. Es besteht sonst die Gefahr, daß aufgrund eines Euterinnendruckes ein irrelevanter Milchflußwert gemessen wird, der aber noch keine Melkbereitschaft des Tieres bedeutet. Falls die Vorstimulation durch die Hand des Melkers bereits ausreichend erfolgte, kann unmittelbar mit der maschinellen Kontrollphase begonnen werden.

Damit eine Überstimulation in jedem Fall vermieden wird, sollte die Dauer der Vorstimulationsphase höchstens 35 Sekunden betragen.

Da sehr leichtmelkende Tiere auch ohne ausreichende Stimulation schon gewisse Milchflußintensitäten erreichen, hat sich ein Schwellenwert für den Milchfluß von mindestens 300 ml/Minute bewährt. Es kann vorteilhaft sein, den Schwellenwert auf mindestens 500 ml/Minute zu erhöhen. Dies ist unter anderem auch abhängig von den unterschiedlich ausgerüsteten Melkständen, z. B. hoch- oder tiefliegende Melkleitungen.

Die Dauer der gesamten Stimulationsphase sollte zeitlich begrenzt werden, um bei Nichterreichen des Schwellenwertes eine nachteilhaft lange Stimulationsphase zu vermeiden.

Die Wirkung des erfindungsgemäßen Verfahrens wird anhand der Zeichnung näher erläutert. Es zeigt
- Fig. 1: den Druckverlauf in der Vorstimulationsphase,
- Fig. 2: den Druckverlauf in der Kontrollphase mit Atmosphärendruck,
- Fig. 3: den Druckverlauf in der Kontrollphase ohne Atmosphärendruck.

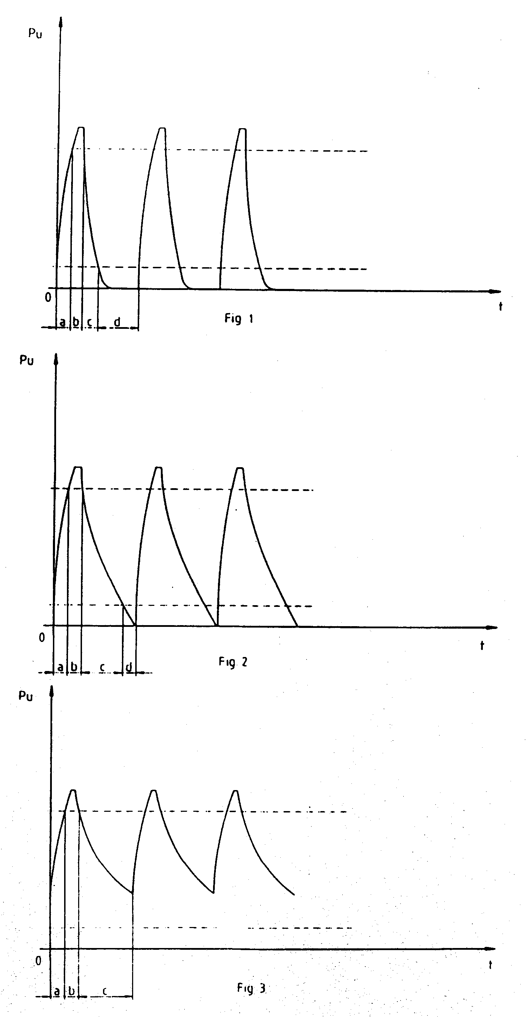

In den Fig. 1 bis 3 ist der Verlauf des Unterdruckes "Pu" in den Melkbecherzwischenräumen über der Zeit "t" aufgetragen.

Wie aus der Fig. 1 ersichtlich, besteht ein Pulszyklus in der Vorstimulationsphase aus Evakuierungsphase "a", Saugphase "b", Belüftungsphase "c" und Druckphase "d". Die Druckphase "d" ist hierbei sehr ausgeprägt. Das Zitzengummi öffnet sich daher kaum, so daß keine Milch abgemolken wird. Durch eine hohe Pulszahl erfolgt die angestrebte Stimulation der Tiere.

Von der Stimulationsphase unterscheidet sich der Druckverlauf in der Kontrollphase gemäß Fig. 2 durch die Verlängerung der Belüftungsphase "c" auf einen Wert, durch den die Zeit für die Druckphase "d" stark reduziert wird. Dadurch wird der Atmosphärendruck nur ganz kurz erreicht. Dies führt zu einem längeren Öffnen des Zitzengummis, so daß der gewünschte Milchfluß ermöglicht wird.

Wird die Belüftungsphase "c" gemäß Fig. 3 weiter verlängert, so entfällt die Druckphase "d" und der Atmosphärendruck wird nicht erreicht. Der Druck auf die Zitze wird somit erheblich verringert und erleichtert dadurch den Milchentzug.

## Patentansprüche

1. Verfahren zum maschinellen Milchentzug, bei dem zum Entziehen der Milch an dem Innenraum eines an eine Zitze angesetzten Melkbechers ein Unterdruck vorbestimmter Höhe angelegt wird und eine Pulsation eines Zitzengummis mit vorbestimmter Frequenz und Stärke durch eine alternierende Belüftung und Evakuierung eines Melkbecherzwischenraumes durchgeführt wird und bei angesetztem Melkbecher in einer Stimulationsphase während einer vorbestimmten Zeit vor der Hauptmelkphase der maximale Pulsunterdruck verringert und auf die Zitze stimulierend eingewirkt wird, **dadurch gekennzeichnet**, daß die Stimulationsphase unterteilt ist in eine Vorstimulationsphase, in der noch kein signifikantes Abmelken von Milch stattfindet, und eine anschließende Kontrollphase, in der durch Änderung des Druckverlaufes im Melkbecherzwischenraum die Intensität des Druckes durch das Zitzengummi auf die Zitze derart verringert wird, daß ein Abmelken von Milch erfolgt, und die Hauptmelkphase beginnt, sobald der Milchfluß einen vorgegebenen Schwellenwert überschreitet.

2. Verfahren nach Anspruch 1, dadurch gekennzeichnet, daß die Veränderung des Druckverlaufes durch Verlängerung der Belüftungsphase des Melkbecherzwischenraumes erzeugt wird.

3. Verfahren nach Anspruch 2, dadurch gekennzeichnet, daß die Verlängerung der Belüftungsphase zu einer unmittelbaren Evakuierung des Melkbecherzwischenraumes nach Erreichen des atmosphärischen Druckes führt.

4. Verfahren nach Anspruch 2, dadurch gekennzeichnet, daß die Verlängerung der Belüftungsphase zu einer erneuten Evakuierung des Melkbecherzwischenraumes vor Erreichen des atmosphärischen Druckes führt.

5. Verfahren nach einem der Ansprüche 1 bis 4, dadurch gekennzeichnet, daß die Dauer der Vorstimulationsphase mindestens 20 Sekunden beträgt.

6. Verfahren nach einem der Ansprüche 1 bis 4, dadurch gekennzeichnet, daß die Dauer der Vorstimulationsphase höchstens 35 Sekunden beträgt.

7. Verfahren nach einem der Ansprüche 1 bis 6, dadurch gekennzeichnet, daß der Schwellenwert für den Milchfluß mindestens 300 ml/Minute beträgt.

8. Verfahren nach einem der Ansprüche 1 bis 7, dadurch gekennzeichnet, daß die gesamte Stimulationsphase zeitlich begrenzt ist.

## Claims

1. A method of drawing off milk by machine wherein to draw off the milk a reduced pressure of a predetermined magnitude is applied to the internal space of a milking cup fitted to a teat and a pulsation of a teat rubber is effected at a predetermined frequency and strength by alternately pressurising and evacuating a milking cup intermediate space and with the milking cup fitted in a stimulation phase during a predetermined time prior to the main milking phase the maximum pulse reduced pressure is decreased and the teat is subjected to a stimulating action, characterised in that the stimulation phase is subdivided into a pre-stimulation phase in which there is not yet any significant milking-off of milk, and a subsequent checking phase in which the intensity of the pressure applied by the teat rubber to the teat is reduced by a variation in the pressure condition in the milking cup intermediate space in such a way that milking-off of milk occurs, and the main milking phase begins as soon as the flow of milk exceeds a predetermined threshold value.

2. A method according to claim 1 characterised in that the variation in the pressure condition is effected by increasing the length of the pressurisation phase of the milking cup intermediate space.

3. A method according to claim 2 characterised in that the increase in the length of the pressurisation phase results in immediate evacuation of the milking cup intermediate space after the attainment of atmospheric pressure.

4. A method according to claim 2 characterised in that the increase in the length of the pressurisation phase results in renewed evacuation of the milking cup intermediate space prior to the attainment of atmospheric pressure.

5. A method according to one of claims 1 to 4 characterised in that the duration of the pre-stimulation phase is at least 20 seconds.

6. A method according to one of claims 1 to 4 characterised in that the duration of the pre-stimulation phase is at most 35 seconds.

7. A method according to one of claims 1 to 6 characterised in that the threshold value for the flow of milk is at least 300 ml/minute.

8. A method according to one of claims 1 to 7 characterised in that the entire stimulation phase is limited in respect of time.

## Revendications

1. Procédé de prélèvement mécanique de lait, dans lequel, pour extraire le lait, une dépression d'une valeur déterminée est appliquée dans l'espace intérieur d'un gobelet trayeur placé sur un trayon, et une pulsation d'un caoutchouc de trayon est obtenue avec une fréquence et une intensité prédéterminées grâce à une ventilation et une évacuation, en alternance, d'un espace intermédiaire de gobelet trayeur et, lorsque le gobelet trayeur est posé, au cours d'une phase de stimulation, pendant un temps prédéterminé avant la phase de traite principale, la dépression de pulsation est réduite et agit de façon stimulante sur le trayon, caractérisé en ce que la phase de stimulation est divisée en une phase de stimulation préalable, dans laquelle il n'y a pas encore de traite de lait en quantité significative, suivie d'une phase de contrôle, au cours de laquelle une modification des valeurs de pression dans l'espace intermédiaire du gobelet trayeur a pour effet de réduire l'intensité de pression du caoutchouc sur le trayon de telle manière qu'il en résulte une traite de lait, et que la phase de traite principale commence dès que le débit de lait dépasse une valeur seuil prédéterminée.

2. Procédé selon la revendication 1, caractérisé en ce que la modification des valeurs de pression est obtenue en rallongeant la phase de ventilation de l'espace intermédiaire du gobelet trayeur.

3. Procédé selon la revendication 2, caractérisé en ce que le rallongement de la phase de ventilation entraîne une évacuation immédiate de l'espace intermédiaire du gobelet trayeur, une fois la pression atmosphérique atteinte.

4. Procédé selon la revendication 2, caractérisé en ce que le rallongement de la phase de ventilation entraîne une nouvelle évacuation de l'espace intermédiaire du gobelet trayeur, avant que la pression atmosphérique ne soit atteinte.

5. Procédé selon l'une des revendications 1 à 4, caractérisé en ce que la durée de la phase de stimulation préalable est au moins de 20 secondes.

6. Procédé selon l'une des revendications 1 à 4, caractérisé en ce que la durée de la phase de stimulation préalable est, au maximum, de 35 secondes.

7. Procédé selon l'une des revendications 1 à 6, caractérisé en ce que la valeur seuil, pour le débit de lait, est d'au moins 300 ml/minute.

8. Procédé selon l'une des revendications 1 à 7, caractérisé en ce que l'ensemble de la phase de stimulation est limité dans le temps.
